(19) Europäisches Patentamt / European Patent Office / Office européen des brevets

(11) **EP 4 553 856 A1**

(12) **EUROPEAN PATENT APPLICATION**
published in accordance with Art. 153(4) EPC

(43) Date of publication:
**14.05.2025 Bulletin 2025/20**

(21) Application number: **23835596.0**

(22) Date of filing: **06.07.2023**

(51) International Patent Classification (IPC):
***H01B 1/06*** *(2006.01)*

(52) Cooperative Patent Classification (CPC):
**H01B 1/06;** Y02E 60/10

(86) International application number:
**PCT/JP2023/025147**

(87) International publication number:
**WO 2024/010065 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 07.07.2022 PCT/JP2022/026960
28.03.2023 PCT/JP2023/012626

(71) Applicant: **NGK Insulators, Ltd.**
**Nagoya city, Aichi 467-8530 (JP)**

(72) Inventors:
• **NISHIZAKI, Tsutomu**
**Nagoya-city, Aichi 467-8530 (JP)**
• **SUTO, Yusaku**
**Nagoya-city, Aichi 467-8530 (JP)**
• **YOSHIDA, Toshihiro**
**Nagoya-city, Aichi 467-8530 (JP)**

(74) Representative: **Mewburn Ellis LLP**
**Aurora Building**
**Counterslip**
**Bristol BS1 6BX (GB)**

(54) **SOLID ELECTROLYTE AND BATTERY**

(57)     A solid electrolyte contains A, $M\alpha$, $M\beta$, $M\gamma$, and Cl, wherein A is at least one element selected from the group consisting of Li and Na, $M\alpha$ is at least one element selected from the group consisting of Zr and Hf, $M\beta$ is at least one element selected from the group consisting of Ta and Nb, $M\gamma$ is at least one element selected from the group consisting of Gd, Yb, Dy, Er, Ho, Eu, and Sc, and the amount of substance of Cl is greater than the amount of substance of A. Accordingly, it is possible to provide the solid electrolyte with high ion conductivity and high stability.

FIG. 1

EP 4 553 856 A1

**Description**

**TECHNICAL FIELD**

The present invention relates to a solid electrolyte and a battery.

**CROSS-REFERENCE TO RELATED APPLICATIONS**

This application claims priority benefit of International Applications No. PCT/JP2022/26960 filed on July 7, 2022 and No. PCT/JP2023/12626 filed on March 28, 2023, the entire disclosures of which are incorporated herein by reference.

**BACKGROUND ART**

In recent years, there is increasing strong demand for downsizing and improved reliability (safety) of batteries serving as power sources for electronic equipment. Attention has been placed on all-solid-state batteries using solid electrolytes. Halides are known as solid electrolytes containing no sulfur, and $Li_3YCl_6$ exhibits high lithium-ion conductivity at ambient temperature (see Japanese Patent No. 6934626 (Document 1), for example). International Publication No. 2020/070956 (Document 2) discloses a halide solid-state electrolyte material expressed by $Li_{6-4b+ab}(Zr_{1-a}Ma)_bX_6$. Here, M is at least one type of element selected from the group consisting of Al, Ga, Bi, Sc, Sm, and Sb, X is a halogen element, and $0 < a < 1$ and $0 < b < 1.5$ are satisfied.

According to "$Na_2ZrCl_6$ enabling highly stable 3V all-solid-state Na-ion batteries" by Hiram Kwak and other nine members (Energy Storage Materials, 2021, volume 37, pp. 47-54) (Document 3), it has been reported that $Na_2ZrCl_6$ exhibits high sodium-ion conductivity at ambient temperature. In the specification of U.S. patent application publication No. 2021/43966 (Document 4), an oxide that contains a compound expressed by $(Li_xM1_y)(M2)_{3-\delta}(M3)_{2-\omega}O_{12-z}X_z$ is disclosed, and the oxide includes a garnet structure. Document 4 discloses, in Example 19, an oxide expressed by $Li_{6.8}La_3Zr_{0.4}Hf_{0.4}Sn_{0.4}Sc_{0.4}Nb_{0.4}O_{11.8}Cl_{0.2}$.

Meanwhile, the inventors of the present application have found that, as a result of preparing chloride electrolyte powder disclosed in Documents 1 and 2 and resting the powder in a dry room controlled to a dew point of -40°C, the electrolyte is decomposed and cannot retain its initial lithium-ion conductivity, i.e., has low stability. Similarly, it has also been found that $Na_2ZrCl_6$ disclosed in Document 3 has low stability.

**SUMMARY OF THE INVENTION**

The present invention is intended for a solid electrolyte, and it is an object of the present invention to provide a solid electrolyte with high ion conductivity and high stability.

Aspect 1 of the present invention is a solid electrolyte that includes A, $M\alpha$, $M\beta$, $M\gamma$, and Cl. A is at least one element selected from a group consisting of Li and Na. $M\alpha$ is at least one element selected from a group consisting of Zr and Hf. $M\beta$ is at least one element selected from a group consisting of Ta and Nb. $M\gamma$ is at least one element selected from a group consisting of Gd, Yb, Dy, Er, Ho, Eu, and Sc. The amount of substance of Cl is greater than the amount of substance of A.

According to the present invention, it is possible to provide a solid electrolyte with high ion conductivity and high stability.

Aspect 2 of the present invention is the solid electrolyte according to Aspect 1, in which A includes Li.

Aspect 3 of the present invention is the solid electrolyte according to Aspect 1 or 2, in which $M\alpha$ includes Zr.

Aspect 4 of the present invention is the solid electrolyte according to any one of Aspects 1 to 3, in which $M\beta$ includes Ta.

Aspect 5 of the present invention is the solid electrolyte according to any one of Aspects 1 to 4, in which $M\gamma$ includes either Gd or Yb.

Aspect 6 of the present invention is the solid electrolyte according to any one of Aspects 1 to 5, which is expressed by a composition formula below:

$$A_{6-(4+a-b)(1+c)}(M\alpha_{(1-a-b)}M\beta_aM\gamma_b)_{1+c}Cl_6$$

where $0 < a$, $0 < b$, $a + b < 1$, and $-0.2 \leq c \leq 0.2$ are satisfied.

Aspect 7 of the present invention is the solid electrolyte according to any one of Aspects 1 to 6, in which A is Li, and a value obtained by dividing an average ionic radius of Li, $M\alpha$, $M\beta$, and $M\gamma$ by an ionic radius of Cl is less than 0.424.

Aspect 8 of the present invention is the solid electrolyte according to any one of Aspects 1 and 3 to 6, in which A is Na, and a value obtained by dividing an average ionic radius of Na, $M\alpha$, $M\beta$, and $M\gamma$ by an ionic radius of Cl is less than 0.526.

Aspect 9 of the present invention is the solid electrolyte according to any one of Aspects 1 to 8, in which no garnet structure is included.

Aspect 10 of the present invention is a battery that includes the solid electrolyte according to any one of Aspects 1 to 9.

These and other objects, features, aspects and advantages of the present invention will become more apparent from the following detailed description of the present invention when taken in conjunction with the accompanying drawings.

## BRIEF DESCRIPTION OF DRAWINGS

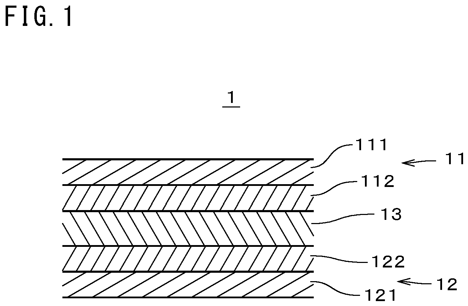

Fig. 1 is a longitudinal sectional view of an all-solid-state lithium-ion secondary battery.

## DESCRIPTION OF EMBODIMENTS

Fig. 1 is a longitudinal sectional view showing an all-solid-state lithium-ion secondary battery 1 (hereinafter, simply referred to as the "all-solid-state secondary battery 1"). The all-solid-state secondary battery 1 includes a positive electrode 11, an electrolyte layer 13, and a negative electrode 12 that are arranged in order from above in Fig. 1. That is, the electrolyte layer 13 is provided between the positive electrode 11 and the negative electrode 12. The electrolyte layer 13 is a solid electrolyte layer and serves also as a separator layer. The positive electrode 11 includes a current collector 111 and a positive layer 112. The positive layer 112 includes a positive-electrode active material. The negative electrode 12 includes a current collector 121 and a negative layer 122. The negative layer 122 includes a negative-electrode active material.

The positive-electrode active material of the positive layer 112 may preferably contain a lithium-containing composite oxide. Preferably, the positive-electrode active material may be a lithium-containing composite oxide having a layered rock-salt structure and may, for example, be NCM ($Li(Ni, Co, Mn)O_2$). The positive-electrode active material may also be any other lithium-containing composite oxide and may, for example, be NCA ($Li(Ni, Co, Al)O_2$) having a layered rock-salt structure, LCO ($LiCoO_2$), LNMO ($LiNi_{0.5}Mn_{1.5}O_4$) having a spinel structure, or LFP ($LiFePO_4$) having an olivine structure. In addition to the positive-electrode active material, the positive layer 112 further contains a solid electrolyte, which will be described later, and an electron conducting agent (e.g., carbon black). The positive layer 112 according to the present embodiment is obtained by integrating the aforementioned substances together by pressurization or heating.

The negative-electrode active material of the negative layer 122 may, for example, be a compound such as LTO ($Li_4Ti_5O_{12}$), NTO ($Nb_2TiO_7$), $TiO_2$ (titanium oxide), graphite, or SiO (silicon monoxide). In addition to the negative-electrode active material, the negative layer 122 contains a solid electrolyte, which will be described later. The negative layer 122 may further contain an electron conducting agent (e.g., carbon black). The negative layer 122 according to the present embodiment is obtained by integrating the aforementioned substances together by pressurization or heating.

The configurations and materials of the positive electrode 11 and the negative electrode 12 in the all-solid-state secondary battery 1 are not limited to the examples described above, and it is possible to adopt any other various configurations and materials.

The electrolyte layer 13 may be configured of or contain a solid electrolyte according to one embodiment of the present invention (hereinafter, also referred to as the "present solid electrolyte"). The solid electrolyte is a lithium-ion (Li) conductive material. The solid electrolyte contains a chlorine (Cl) element, a lithium (Li) element, and other three types of metal ($M\alpha$, $M\beta$, and $M\gamma$) elements serving as cations. The solid electrolyte may consist of Li, $M\alpha$, $M\beta$, $M\gamma$, and Cl.

$M\alpha$ is an element serving as a quadrivalent cation and is at least one element selected from the group consisting of zirconium (Zr) and hafnium (Hf). $M\beta$ is an element serving as a pentavalent cation and is at least one element selected from the group consisting of tantalum (Ta) and niobium (Nb). $M\gamma$ is an element serving as a trivalent cation and is at least one element selected from the group consisting of gadolinium (Gd), ytterbium (Yb), dysprosium (Dy), erbium (Er), holmium (Ho), europium (Eu), and scandium (Sc). The solid electrolyte that contains, in addition to Li, at least one type of each of the trivalent, quadrivalent, and pentavalent elements as cations achieves high lithium-ion conductivity and high stability as will be described later. Since the solid electrolyte does not produce a hydrogen sulfide gas, the all-solid-state secondary battery 1 is provided with high safety.

In the present solid electrolyte, $M\alpha$ may preferably contain Zr and may contain only Zr. This enables suppressing a reduction in lithium-ion conductivity caused by the influence of water or the like in the air and more reliably improving stability, as will be described later. $M\beta$ may preferably contain Ta and may contain only Ta. This enables recovering lithium-ion conductivity by heat treatment, as will be described later in examples. $M\gamma$ may preferably contain Gd or Yb and may contain only Gd or Yb or only Gd and Yb. This enables more reliably improving lithium-ion conductivity immediately after synthesis (in the early stages), as will be described later in examples. The amount of substance of Li may, for example, be greater than the amount of substance of any of $M\alpha$, $M\beta$, and $M\gamma$ and may preferably be greater than a total of the amounts of substances of Mα, Mβ, and Mγ. By way of example, the amount of substance of Mα may be greater than the amount of substance of any of Mβ and Mγ, or may be smaller than the amount of substance of any of Mβ and Mγ. Typically, the amount of substance of Cl is greater than the amount of substance of Li. For example, the amount of substance of Cl may be greater than the amount of substance of any of Li, Mα, Mβ, and Mγ and may be greater than a total of the amounts of substances of Li, Mα, Mβ, and Mγ.

The solid electrolyte may preferably be a compound expressed by Composition Formula (1) given below:

$$Li_{6-(4+a-b)(1+c)}(M\alpha_{(1-a-b)}MO\beta_{a}M\gamma_{b})_{1+c}Cl_{6} \qquad ...(1)$$

where $0 < a$, $0 < b$, $a + b < 1$, and $-0.2 \leq c \leq 0.2$ are satisfied. Here, a and b may satisfy $0.1 \leq a \leq 0.4$ and $0.1 \leq b \leq 0.4$ or may satisfy $0.1 \leq a + b \leq 0.6$. Also, c may satisfy $-0.1 \leq c \leq 0.1$, and c may be zero. The solid electrolyte may be either crystalline or amorphous.

In the case of determining whether an unknown solid electrolyte is the present solid electrolyte, chemical analysis is conducted on the unknown solid electrolyte so as to determine whether constituent elements of the unknown solid electrolyte are Li, Mα, Mβ, Mγ, and Cl. In the case of determining whether the unknown solid electrolyte satisfies Composition Formula (1) given above, Li, Mα, Mβ, and Mγ can be quantitated by a method such as ICP-emission spectroscopy, and Cl can be quantitated by, for example, ion chromatography.

The molar ratio of Li, Mα, Mβ, Mγ, and Cl in Composition Formula (1) given above is Li:Mα:Mβ:Mγ:Cl = 6-(4+a-b)(1+c):(1-a-b)(1+c):a(1+c):b(1+c):6. In the molar ratio obtained by the analysis conducted on the unknown solid electrolyte, if the value of Li is greater than or equal to $0.90 \times \{6-(4+a-b)(1+c)\}$ and less than or equal to $1.10 \times \{6-(4+a-b)(1+c)\}$, Li is considered to satisfy Composition Formula (1) given above. More preferably, the value of Li may be greater than or equal to $0.95 \times \{6-(4+a-b)(1+c)\}$ and may be less than or equal to $1.05 \times \{6-(4+a-b)(1+c)\}$. The same applies to Mα, Mβ, and Mγ.

In the case of a preferable solid electrolyte, the value obtained by dividing the average ionic radius of Li, Mα, Mβ, and Mγ by the ionic radius of Cl (the value is hereinafter referred to as the "average ionic radius ratio") is less than 0.424. The average ionic radius ratio may more preferably be less than 0.422 and yet more preferably be less than 0.420. This solid electrolyte can more reliably improve stability, as will be described later. There are no particular limitations on the lower limit for the average ionic radius ratio, and the lower limit may, for example, be 0.395. The average ionic radius (rc) of Li, Mα, Mβ, and Mγ contained in the solid electrolyte is calculated based on Eq. 1.

$$(Eq.\ 1)$$

$$rc = \Sigma(rC \cdot RC)/\Sigma RC$$

Here, rC represents the ionic radius of each element (i.e., cation) included in Li, Mα, Mβ, and Mγ. RC represents the amount of substance of each element. The average ionic radius ratio (rc/ra) is obtained by dividing the average ionic radius (rc) of Li, Mα, Mβ, and Mγ by the ionic radius (ra) of Cl. It is conceivable that the solid electrolyte with an average ionic radius ratio of lower than 0.424 has a short bond distance between the cations and Cl and accordingly has a high bonding force between the cations and Cl. This high bonding force is assumed to improve stability as a material.

The present solid electrolyte may be produced by, for example, the following method. Firstly, chloride powder that contains Li, chloride powder that contains Mα, chloride powder that contains Mβ, and chloride powder that contains Mγ are prepared. The chloride containing Li may, for example, be LiCl. The chloride containing Mα may, for example, be $M\alpha Cl_4$. The chloride containing Mβ may, for example, be $M\beta Cl_5$. The chloride containing Mγ may, for example, be $M\gamma Cl_3$. The powder of these substances is weighed and mixed together in a predetermined molar ratio.

Then, a resultant mixture is subjected to milling processing (mechanochemical milling). By way of example, the milling processing may use a planetary ball mill. The planetary ball mill is capable of generating extremely high impact energy because a stage with a pot placed thereon revolves while the pot rotates on its axis. The milling processing may also use any other type of pulverizer. Through the aforementioned milling processing, powder of the present solid electrolyte is obtained for use in the positive layer 112, the negative layer 122, and the electrolyte layer 13. Although the milling processing is performed at ordinary temperature according to the present example of processing, conditions for the milling processing such as temperature may be changed appropriately. The present solid electrolyte may also be produced by any other processing such as firing different from the milling processing.

The present solid electrolyte may contain sodium (Na), instead of or together with Li. That is, the solid electrolyte contains A, Mα, Mβ, Mγ, and Cl, where A is at least one element selected from the group consisting of Li and Na. Mα, Mβ, and Mγ are as described above. Even in the case where A is Na, high (sodium-)ion conductivity and high stability are achieved as will be described later. The solid electrolyte may consist of A, Mα, Mβ, Mγ, and Cl. In this case, a total mass of A, Mα, Mβ, Mγ, and Cl in the solid electrolyte as a whole may, for example, be 95% by mass or higher. Typically, the amount of substance of Cl is greater than the amount of substance of A. The amount of substance of Cl may be greater than the amount of substance of any of the substances contained in the solid electrolyte. Unlike the oxide disclosed in the specification of U.S. patent application publication No.2021/43966 (Document 4 described above), the present solid electrolyte may preferably not include a garnet structure. Whether a garnet structure is included can be checked by X-ray diffraction analysis.

In consideration of the case where the present solid electrolyte contains Na, Composition Formula (1) given above is expressed by Composition Formula (2) given below:

$$A_{6-(4+a-b)(1+c)}(M\alpha_{(1-a-b)}M\beta_a M\gamma_b)_{1+c}Cl_6 \qquad ...(2)$$

where $0 < a$, $0 < b$, $a + b < 1$, and $-0.2 \leq c \leq 0.2$ are satisfied as in Composition Formula (1). Note that Na can be quantitated by ICP-emission spectroscopy or any other like method.

In the case of a preferable solid electrolyte where A is Na, the value obtained by dividing the average ionic radius of Na, $M\alpha$, $M\beta$, and $M\gamma$ by the ionic radius of Cl (hereinafter, referred to as the "average ionic radius ratio" as in the case where A is Li) is less than 0.526. The average ionic radius ratio may more preferably be lower than 0.520 and yet more preferably be lower than 0.515. This solid electrolyte more reliably improves stability as will be described later. There are no particular limitations on the lower limit for the average ionic radius ratio, and the lower limit may, for example, be 0.480. The average ionic radius ratio for the case where A is Na is obtained in the same manner as in the case where A is Li.

In the production of the solid electrolyte in which A is Na, chloride powder that contains Na is used, instead of chloride powder that contains Li. The chloride containing Na may, for example, be NaCl. Then, the chloride powder containing Na, the chloride powder containing $M\alpha$, the chloride powder containing $M\beta$, and the chloride powder containing $M\gamma$ are mixed together and subjected to the milling processing so as to obtain solid electrolyte powder in which A is Na.

The all-solid-state secondary battery 1 using a solid electrolyte in which A includes Na may be an all-solid-state sodium-ion secondary battery. In this case, examples of the positive-electrode active material of the positive layer 112 include layered compounds such as $NaCoO_2$, $NaNiO_2$, $NaMnO_2$, $Na(Ni, Co, Mn)O_2$, $NaFeO_2$, $Na(Fe, Mn)O_2$, $Na(Ni, Mn, Fe, Ti)O_2$, spinel-type compounds such as $NaMn_2O_4$, and polyanion-type compounds such as $Na_3V_2(PO_4)_3$, $Na_2Fe_2(SO_4)_3$, $NaFePO_4$, $Na_4Fe_7(PO_4)_6$, $Na_3V(PO_3)_3N$. Examples of the negative-electrode active material of the negative layer 122 include metals such as Na, In, Sn, and Sb, Na alloys, graphite, hard carbon, $Na_{4/3}Ti_{5/3}O_4$, $Na_2Ti_6O_{13}$, $Na_{0.66}[Li_{0.22}Ti_{0.78}]O_2$, $Na_3V_2(PO_4)_3$, and SnO. Here, A may include Li and Na, and conducting ions in the all-solid-state secondary battery 1 may be both Li ions and Na ions.

Next, description is given of examples of the present solid electrolyte in which A is Li and comparative examples therefor. Tables 1 and 2 show information such as the compositions of solid electrolytes according to Examples 1 to 21 and evaluation results therefor.

Table 1

| | Solid Electrolyte | Ion Conductivity [S/cm] | | | Maintenance Factor [%] | | Average Ionic Radius Ratio | Satisfy $(r_c/r_a < 0.424)$ |
|---|---|---|---|---|---|---|---|---|
| | | After Synthesis | 16h Exposure | 16h Exposure + Heat Treatment | (16h Exposure) /(After Synthesis) | (16h Exposure + Heat Treatment) /(After Synthesis) | $r_c/r_a$ | |
| Example 1 | $Li_{1.7}Zr_{0.5}Ta_{0.4}Gd_{0.1}Cl_6$ | $5.4 \times 10^{-4}$ | $5.7 \times 10^{-5}$ | $2.9 \times 10^{-4}$ | 11 | 54 | 0.410 | ○ |
| Example 2 | $Li_{1.8}Zr_{0.6}Ta_{0.3}Gd_{0.1}Cl_6$ | $6.5 \times 10^{-4}$ | $2.5 \times 10^{-4}$ | $5.9 \times 10^{-4}$ | 38 | 91 | 0.412 | ○ |
| Example 3 | $Li_{1.9}Zr_{0.7}Ta_{0.2}Gd_{0.1}Cl_6$ | $7.9 \times 10^{-4}$ | $1.4 \times 10^{-4}$ | $2.2 \times 10^{-4}$ | 18 | 28 | 0.413 | ○ |
| Example 4 | $Li_{2.0}Zr_{0.8}Ta_{0.1}Gd_{0.1}Cl_6$ | $6.9 \times 10^{-4}$ | $1-2 \times 10^4$ | $2.1 \times 10^{-4}$ | 17 | 30 | 0.415 | ○ |
| Example 5 | $Li_{1.9}Zr_{0.5}Ta_{0.3}Gd_{0.2}Cl_6$ | $4.8 \times 10^{-4}$ | $8.6 \times 10^{-5}$ | $2.3 \times 10^{-4}$ | 18 | 48 | 0.416 | ○ |
| Example 6 | $Li_{2.0}Zr_{0.6}Ta_{0.2}Gd_{0.2}Cl_6$ | $9.2 \times 10^{-4}$ | $2.2 \times 10^{-4}$ | $3.6 \times 10^{-4}$ | 24 | 39 | 0.418 | ○ |
| Example 7 | $Li_{2.1}Zr_{0.7}Ta_{0.1}Gd_{0.2}Cl_6$ | $9.9 \times 10^{-4}$ | $1.2 \times 10^{-4}$ | $1.0 \times 10^{-4}$ | 12 | 10 | 0.419 | ○ |
| Example 8 | $Li_{2.1}Zr_{0.5}Ta_{0.2}Gd_{0.3}Cl_6$ | $8.9 \times 10^{-4}$ | $2.6 \times 10^{-4}$ | $3.5 \times 10^{-4}$ | 29 | 39 | 0.422 | ○ |
| Example 9 | $Li_{2.3}Zr_{0.5}Ta_{0.1}Gd_{0.4}Cl_6$ | $1.0 \times 10^{-3}$ | $3.9 \times 10^{-5}$ | $9.5 \times 10^{-6}$ | 4 | 1 | 0.426 | × |
| Example 10 | $Li_{1.7}Zr_{0.5}Ta_{0.4}Yb_{0.1}Cl_6$ | $7.5 \times 10^{-4}$ | $1.1 \times 10^{-4}$ | $2.4 \times 10^{-4}$ | 15 | 32 | 0.408 | ○ |
| Example 11 | $Li_{1.9}Zr_{0.5}Ta_{0.3}Yb_{0.2}Cl_6$ | $1.2 \times 10^{-3}$ | $4.9 \times 10^{-4}$ | $1.2 \times 10^{-3}$ | 41 | 100 | 0.413 | ○ |
| Example 12 | $Li_{2.1}Zr_{0.5}Ta_{0.2}Yb_{0.3}Cl_6$ | $1.4 \times 10^{-3}$ | $4.2 \times 10^{-4}$ | $9.0 \times 10^{-4}$ | 30 | 64 | 0.418 | ○ |
| Example 13 | $Li_{2.3}Zr_{0.5}Ta_{0.1}Yb_{0.4}Cl_6$ | $1.2 \times 10^{-3}$ | $3.6 \times 10^{-4}$ | $6.3 \times 10^{-4}$ | 30 | 53 | 0.422 | ○ |

Table 2

| | Solid Electrolyte | Ion Conductivity [S/cm] | | | Maintenance Factor [%] | | Average Ionic Radius Ratio | Satisfy ($r_c/r_a < 0.424$) |
|---|---|---|---|---|---|---|---|---|
| | | After Synthesis | 16h Exposure | 16h Exposure + Heat Treatment | (16h Exposure) /(After Synthesis) | (16h Exposure + Heat Treatment) /(After Synthesis) | $r_c/r_a$ | |
| Example 14 | $Li_{2.2}Zr_{0.4}Ta_{0.2}Gd_{0.2}Yb_{0.2}Cl_6$ | $1.2 \times 10^{-3}$ | $2.5 \times 10^{-4}$ | $5.7 \times 10^{-4}$ | 21 | 48 | 0.423 | ○ |
| Example 15 | $Li_{1.9}Zr_{0.5}Nb_{0.3}Yb_{0.2}Cl_6$ | $8.0 \times 10^{-6}$ | $2.1 \times 10^{-4}$ | $4.6 \times 10^{-4}$ | 26 | 58 | 0.413 | ○ |
| Example 16 | $Li_{1.9}Hf_{0.5}Ta_{0.3}Yb_{0.2}Cl_6$ | $8.3 \times 10^{-4}$ | $1.5 \times 10^{-4}$ | $2.5 \times 10^{-4}$ | 18 | 30 | 0.412 | ○ |
| Example 17 | $Li_{1.9}Zr_{0.7}Ta_{0.2}Ho_{0.1}Cl_6$ | $1.2 \times 10^{-3}$ | $1.4 \times 10^{-4}$ | $1.2 \times 10^{-4}$ | 12 | 10 | 0.413 | ○ |
| Example 18 | $Li_{1.9}Zr_{0.7}Ta_{0.2}Dy_{0.1}Cl_6$ | $7.1 \times 10^{-4}$ | $1.7 \times 10^{-4}$ | $2.0 \times 10^{-4}$ | 24 | 28 | 0.413 | ○ |
| Example 19 | $Li_{1.9}Zr_{0.7}Ta_{0.2}Er_{0.1}Cl_6$ | $8.9 \times 10^{-4}$ | $1.5 \times 10^{-4}$ | $2.3 \times 10^{-4}$ | 17 | 26 | 0.412 | ○ |
| Example 20 | $Li_{1.8}Zr_{0.6}Ta_{0.3}Sc_{0.1}Cl_6$ | $9.1 \times 10^{-4}$ | $5.1 \times 10^{-4}$ | $1.1 \times 10^{-3}$ | 56 | 121 | 0.408 | ○ |
| Example 21 | $Li_{1.8}Zr_{0.6}Ta_{0.3}Eu_{0.1}Cl_6$ | $6.5 \times 10^{-4}$ | $3.8 \times 10^{-4}$ | $7.9 \times 10^{-4}$ | 58 | 122 | 0.412 | ○ |

Example 1

Preparation of Electrolyte

In an argon atmosphere with a dew point of -60°C or lower, LiCl, $ZrCl_4$, $TaCl_5$, and $GdCl_3$ serving as source powder were weighed in a molar ratio of LiCl:$ZrCl_4$:$TaCl_5$:$GdCl_3$ = 1.7:0.5:0.4:0.1 and mixed together by pulverization in a mortar. Resultant mixed power was poured together with zirconia cobblestone into a zirconia pot and milled at 300 rpm for 20 hours by using a planetary ball mill so as to obtain solid electrolyte powder.

Exposure Test

The solid electrolyte powder was poured into a shale and rested (was exposed) for 16 hours in a dry room controlled to a dew point of -40°C.

Heat Treatment

The solid electrolyte powder rested (exposed) for 16 hours in the dry room was subjected to heat treatment at 150°C.

Conductivity Measurement

The solid electrolyte powder was cast in a mold made from a resinous sleeve and upper and lower stainless (SUS) punches and was uniaxially press-molded by pressurization at 150 MPa. Then, lithium-ion conductivity (sodium-ion conductivity according Examples 22 and 23 and Comparative Examples 10 and 11 described later: hereinafter also simply referred to as the "ion conductivity") was calculated by connecting conductors to the upper and lower punches and conducting impedance measurement at ambient temperature.

Stability Evaluation

The ion conductivity was calculated by measuring the impedance of the solid electrolyte powder immediately after the milling (after synthesis) in the planetary ball mill, the impedance of the solid electrolyte powder exposed to the dry room for 16 hours, and the impedance of the solid electrolyte powder subjected to heat treatment after the exposure. Table 1 shows the ion conductivity of the solid electrolyte powder immediately after milling (i.e., initial conductivity) in the "After synthesis" column, the ion conductivity of the solid electrolyte powder exposed for 16 hours in the dry room in the "16h Exposure" column, and the ion conductivity of the solid electrolyte powder subjected to heat treatment after the exposure in the "16h Exposure + Heat Treatment" column (the same applies to Table 2 and to Tables 3 and 4, which will be described later).
In stability evaluation, maintenance factors of the ion conductivities were calculated. The maintenance factor of the ion conductivity after 16-hour exposure was obtained from (100 × (Ion Conductivity after 16h Exposure)/(Ion Conductivity after Synthesis)). The maintenance factor of the ion conductivity after 16-hour exposure and heat treatment was obtained from (100 × (Ion Conductivity after 16h Exposure + Heat Treatment)/(Ion Conductivity after Synthesis)).

Calculation of Average Ionic Radius Ratio

The average ionic radius ratio of the solid electrolyte according to Example 1 was calculated using Eq. 1 given above. Here, the solid electrolyte according to Example 1 contained Li, Zr, Ta, and Gd as cations and Cl as an anion. The ionic radii (coordination number 6) of Li, Zr, Ta, Gd, and Cl were 0.76Å, 0.72Å, 0.64Å, 0.938Å, and 1.81Å, respectively. The molar ratio of Li, Zr, Ta, and Gd was 1.700:0.500:0.400:0.100. Thus, the average ionic radius $r_c$ of the cations was determined as 0.741Å by calculation of $(1.700 \times 0.76 + 0.500 \times 0.72 + 0.400 \times 0.64 + 0.100 \times 0.938)/(1.700 + 0.500 + 0.400 + 0.100)$. The ionic radius $r_a$ of the anion was 1.81Å. Accordingly, the average ionic radius ratio was determined as 0.410 by calculation of $r_c/r_a$. In the "Satisfy ($r_c/r_a$ < 0.424)" column in Table 1, cases where the average ionic radius ratio was lower than 0.424 were evaluated as satisfied (indicated by an open circle), and cases where the average ionic radius ratio was higher than or equal to 0.424 were evaluated as not satisfied (indicated by a cross)(the same applies to Tables 2 and 3).

Example 2

The electrolyte was prepared, tested, and evaluated in the same manner as in Example 1, except that LiCl, $ZrCl_4$,

TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 1.8:0.6:0.3:0.1.

Example 3

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 1.9:0.7:0.2:0.1.

Example 4

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 2.0:0.8:0.1:0.1.

Example 5

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 1.9:0.5:0.3:0.2.

Example 6

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 2.0:0.6:0.2:0.2.

Example 7

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 2.1:0.7:0.1:0.2.

Example 8

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 2.1:0.5:0.2:0.3.

Example 9

The electrolyte was prepared, tested, and evaluated in the same manner as in Example 1, except that LiCl, ZrCl$_4$, TaCl$_5$, and GdCl$_3$ serving as source powder in the preparation of the electrolyte according to Example 1 described above were weighed in a molar ratio of LiCl:ZrCl$_4$:TaCl$_5$:GdCl$_3$ = 2.3:0.5:0.1:0.4.

Example 10

The electrolyte was prepared, tested, and evaluated in the same manner as in Example 1, except that LiCl, ZrCl$_4$, TaCl$_5$, and YbCl$_3$ serving as source powder in the preparation of the electrolyte according to Example 1 described above were weighed in a molar ratio of LiCl:ZrCl$_4$:TaCl$_5$:YbCl$_3$ = 1.7:0.5:0.4:0.1.

Example 11

The electrolyte was prepared, tested, and evaluated in the same manner as in Example 1, except that LiCl, ZrCl$_4$, TaCl$_5$, and YbCl$_3$ serving as source powder in the preparation of the electrolyte according to Example 1 described above were weighed in a molar ratio of LiCl:ZrCl$_4$:TaCl$_5$:YbCl$_3$ = 1.9:0.5:0.3:0.2.

Example 12

The electrolyte was prepared, tested, and evaluated in the same manner as in Example 1, except that LiCl, $ZrCl_4$, $TaCl_5$, and $YbCl_3$ serving as source powder in the preparation of the electrolyte according to Example 1 described above were weighed in a molar ratio of $LiCl:ZrCl_4:TaCl_5:YbCl_3 = 2.1:0.5:0.2:0.3$.

Example 13

The electrolyte was prepared, tested, and evaluated in the same manner as in Example 1, except that LiCl, $ZrCl_4$, $TaCl_5$, and $YbCl_3$ serving as source powder in the preparation of the electrolyte according to Example 1 described above were weighed in a molar ratio of $LiCl:ZrCl_4:TaCl_5:YbCl_3 = 2.3:0.5:0.1:0.4$.

Example 14

The electrolyte was prepared, tested, and evaluated in the same manner as in Example 1, except that LiCl, $ZrCl_4$, $TaCl_5$, $GdCl_3$, and $YbCl_3$ serving as source powder in the preparation of the electrolyte according to Example 1 described above were weighed in a molar ratio of $LiCl:ZrCl_4:TaCl_5:GdCl_3:YbCl_3 = 2.2:0.4:0.2:0.2:0.2$.

Example 15

The electrolyte was prepared, tested, and evaluated in the same manner as in Example 1, except that LiCl, $ZrCl_4$, $NbCl_5$, and $YbCl_3$ serving as source powder in the preparation of the electrolyte according to Example 1 described above were weighed in a molar ratio of $LiCl:ZrCl_4:NbCl_5:YbCl_3 = 1.9:0.5:0.3:0.2$.

Example 16

The electrolyte was prepared, tested, and evaluated in the same manner as in Example 1, except that LiCl, $HfCl_4$, $TaCl_5$, and $YbCl_3$ serving as source powder in the preparation of the electrolyte according to Example 1 described above were weighed in a molar ratio of $LiCl:HfCl_4:TaCl_5:YbCl_3 = 1.9:0.5:0.3:0.2$.

Example 17

The electrolyte was prepared, tested, and evaluated in the same manner as in Example 1, except that LiCl, $ZrCl_4$, $TaCl_5$, and $HoCl_3$ serving as source powder in the preparation of the electrolyte according to Example 1 described above were weighed in a molar ratio of $LiCl:ZrCl_4:TaCl_5:HoCl_3 = 1.9:0.7:0.2:0.1$.

Example 18

The electrolyte was prepared, tested, and evaluated in the same manner as in Example 1, except that LiCl, $ZrCl_4$, $TaCl_5$, and $DyCl_3$ serving as source powder in the preparation of the electrolyte according to Example 1 described above were weighed in a molar ratio of $LiCl:ZrCl_4:TaCl_5:DyCl_3 = 1.9:0.7:0.2:0.1$.

Example 19

The electrolyte was prepared, tested, and evaluated in the same manner as in Example 1, except that LiCl, $ZrCl_4$, $TaCl_5$, and $ErCl_3$ serving as source powder in the preparation of the electrolyte according to Example 1 described above were weighed in a molar ratio of $LiCl:ZrCl_4:TaCl_5:ErCl_3 = 1.9:0.7:0.2:0.1$.

Example 20

The electrolyte was prepared, tested, and evaluated in the same manner as in Example 1, except that LiCl, $ZrCl_4$, $TaCl_5$, and $ScCl_3$ serving as source powder in the preparation of the electrolyte according to Example 1 described above were weighed in a molar ratio of $LiCl:ZrCl_4:TaCl_5:ScCl_3 = 1.8:0.6:0.3:0.1$.

Example 21

The electrolyte was prepared, tested, and evaluated in the same manner as in Example 1, except that LiCl, $ZrCl_4$, $TaCl_5$, and $EuCl_3$ serving as source powder in the preparation of the electrolyte according to Example 1 described above were weighed in a molar ratio of $LiCl:ZrCl_4:TaCl_5:EuCl_3 = 1.8:0.6:0.3:0.1$.

Table 3 shows the compositions of solid electrolytes according to Comparative Examples 1 to 9, and evaluation results therefor .

Table 3

| | Solid Electrolyte | Ion Conductivity [S/cm] | | | Maintenance Factor [%] | | Average Ionic Radius Ratio | Satisfy ($r_c/r_a <$ 0.424) |
|---|---|---|---|---|---|---|---|---|
| | | After Synthesis | 16h Exposure | 16h Exposure + Heat Treatment | (16h Exposure) /(After Synthesis) | (16h Exposure + Heat Treatment) /(After Synthesis) | $r_c/r_a$ | |
| Comparative Example 1 | $Li_3YCl_6$ | $3.5 \times 10^{-4}$ | $5.3 \times 10^{-8}$ | $1.1 \times 10^{-8}$ | 0.02 | 0.003 | 0.439 | × |
| Comparative Example 2 | $Li_2ZrCl_6$ | $3.0 \times 10^{-4}$ | $2.7 \times 10^{-5}$ | $1.5 \times 10^{-5}$ | 9 | 5 | 0.413 | ○ |
| Comparative Example 3 | $Li_3YbCl_6$ | $4.0 \times 10^{-4}$ | $1.1 \times 10^{-7}$ | $8.7 \times 10^{-9}$ | 0.03 | 0.002 | 0.435 | × |
| Comparative Example 4 | $Li_{2.1}Zr_{0.9}Sm_{0.1}Cl_6$ | $4.9 \times 10^{-4}$ | $3.4 \times 10^{-6}$ | $2.7 \times 10^{-5}$ | 0.7 | 6 | 0.417 | ○ |
| Comparative Example 5 | $Li_{2.1}Zr_{0.9}Bi_{0.1}Cl_6$ | $3.8 \times 10^{-4}$ | $1.8 \times 10^{-6}$ | $3.1 \times 10^{-5}$ | 0.5 | 8 | 0.418 | ○ |
| Comparative Example 6 | $Li_{2.3}Zr_{0.7}Gd_{0.3}Cl_6$ | $1.0 \times 10^{-3}$ | $1.9 \times 10^{-6}$ | $9.7 \times 10^{-6}$ | 0.2 | 1 | 0.424 | × |
| Comparative Example 7 | $Li_{2.3}Zr_{0.7}Yb_{0.3}Cl_6$ | $1.3 \times 10^{-6}$ | $5.9 \times 10^{-6}$ | $4.4 \times 10^{-6}$ | 0.5 | 0.3 | 0.421 | ○ |
| Comparative Example 8 | $Li_{2.5}Zr_{0.5}Y_{0.5}Cl_6$ | $1.4 \times 10^{-3}$ | $3.6 \times 10^{-5}$ | $1.3 \times 10^{-6}$ | 3 | 0.09 | 0.428 | × |
| Comparative Example 9 | $Li_{1.7}Zr_{0.7}Ta_{0.3}Cl_6$ | $2.0 \times 10^{-4}$ | $4.0 \times 10^{-6}$ | $6.2 \times 10^{-5}$ | 2 | 31 | 0.407 | ○ |

Comparative Example 1

The electrolyte was prepared, tested, and evaluated in the same manner as in Example 1, except that LiCl and $YCl_3$ serving as source powder in the preparation of the electrolyte according to Example 1 described above were weighed in a molar ratio of $LiCl:YCl_3 = 3:1$

Comparative Example 2

The electrolyte was prepared, tested, and evaluated in the same manner as in Example 1, except that LiCl and $ZrCl_4$ serving as source powder in the preparation of the electrolyte according to Example 1 described above were weighed in a molar ratio of $LiCl:ZrCl_4 = 2:1$.

Comparative Example 3

The electrolyte was prepared, tested, and evaluated in the same manner as in Example 1, except that LiCl and $YbCl_3$ serving as source powder in the preparation of the electrolyte according to Example 1 described above were weighed in a molar ratio of $LiCl:YbCl_3 = 3:1$.

Comparative Example 4

The electrolyte was prepared, tested, and evaluated in the same manner as in Example 1, except that LiCl, $ZrCl_4$, and $SmCl_3$ serving as source powder in the preparation of the electrolyte according to Example 1 described above were weighed in a molar ratio of $LiCl:ZrCl_4:SmCl_3 = 2.1:0.9:0.1$.

Comparative Example 5

The electrolyte was prepared, tested, and evaluated in the same manner as in Example 1, except that LiCl, $ZrCl_4$, and $BiCl_3$ serving as source powder in the preparation of the electrolyte according to Example 1 described above were weighed in a molar ratio of $LiCl:ZrCl_4:BiCl_3 = 2.1:0.9:0.1$.

Comparative Example 6

The electrolyte was prepared, tested, and evaluated in the same manner as in Example 1, except that LiCl, $ZrCl_4$, and $GdCl_3$ serving as source powder in the preparation of the electrolyte according to Example 1 described above were weighed in a molar ratio of $LiCl:ZrCl_4:GdCl_3 = 2.3:0.7:0.3$.

Comparative Example 7

The electrolyte was prepared, tested, and evaluated in the same manner as in Example 1, except that LiCl, $ZrCl_4$, and $YbCl_3$ serving as source powder in the preparation of the electrolyte according to Example 1 described above were weighed in a molar ratio of $LiCl:ZrCl_4:YbCl_3 = 2.3:0.7:0.3$.

Comparative Example 8

The electrolyte was prepared, tested, and evaluated in the same manner as in Example 1, except that LiCl, $ZrCl_4$, and $YCl_3$ serving as source powder in the preparation of the electrolyte according to Example 1 described above were weighed in a molar ratio of $LiCl:ZrCl_4:YCl_3 = 2.5:0.5:0.5$.

Comparative Example 9

The electrolyte was prepared, tested, and evaluated in the same manner as in Example 1, except that LiCl, $ZrCl_4$, and $TaCl_5$ serving as source powder in the preparation of the electrolyte according to Example 1 described above were weighed in a molar ratio of $LiCl:ZrCl_4:TaCl_5 = 1.7:0.7:0.3$.

As shown in Tables 1 to 3, in any of the solid electrolytes according to Examples 1 to 21, the ion conductivity after synthesis was higher than or equal to $4.8 \times 10^{-4}$ S/cm, and the ion conductivity after 16-hour exposure was higher than or equal to $3.9 \times 10^{-5}$ S/cm. On the other hand, in the solid electrolytes according to Comparative Examples 1 to 9, at least one of the ion conductivity after synthesis and the ion conductivity after 16-hour exposure was lower than the above value. In this way, the solid electrolytes according to Examples 1 to 21 were materials that achieved both high ion conductivity and high stability. The solid electrolytes according to Examples 1 to 21 also satisfied Composition Formula (1) given above.

The solid electrolytes according to Examples 1 to 8 and 10 to 21 exhibited higher ion conductivities than the solid electrodes according to Comparative Examples 1 to 9 both after 16-hour exposure and after 16-hour exposure and heat treatment, and exhibited ion conductivities of higher than or equal to $1.0 \times 10^{-4}$ S/cm after 16-hour exposure and heat treatment. Besides, the maintenance factors of the ion conductivities after 16-hour exposure were higher than in Comparative Examples 1 to 9. This indicates that the solid electrolytes according to Examples 1 to 8 and 10 to 21, which exhibited average ionic radius ratios (rc/ ra) of lower than 0.424, were materials having higher stability.

Although a detailed mechanism for the improved stability of the solid electrolytes according to Examples 1 to 21 remains uncertain, it is conceivable that the inclusion of at least one type of each of trivalent, quadrivalent, and pentavalent elements as cations, in addition to Li, could contribute to stability. From the viewpoint of improving stability, it is preferable that the average ionic radius ratio may preferably be lower than 0.424 as described above. A low average ionic radius ratio indicates a short bond distance between the cations and Cl, and accordingly it is conceivable that the bonding force between the cations and Cl is high. This high bonding force is assumed to improve stability as materials.

Comparison of Comparative Examples 1 to 3 shows that the Zr-containing solid electrolyte according to Comparative Example 2 exhibited higher ion conductivity after 16-hour exposure. In Examples 1 to 4 and 5 to 7, higher Zr ratios tended to improve ion conductivity after 16-hour exposure. It is thus conceivable that the Zr-containing solid electrolytes could more reliably improve stability. Although the reason for this remains uncertain, it is confirmed that the Zr-containing solid electrolytes have improved stability with respect to water, and this is considered to contribute to the improvement in ion conductivity after 16-hour exposure. As in the case of using Zr, the use of Hf serving as a quadrivalent cation, instead of or together with Zr, is also considered to improve stability. In actuality, in Example 16, Hf was used instead of Zr, and in this case, a certain degree of high ion conductivity was exhibited after 16-hour exposure.

In Comparative Example 9 in which Zr and Ta were contained in addition to Li and Cl, higher ion conductivity was exhibited after 16-hour exposure and heat treatment than in Comparative Example 2 in which only Zr was contained. In Examples 1 to 14 and 16 to 21 in which Ta was contained, the ion conductivities after 16-hour exposure and heat treatment were generally high. Accordingly, it is conceivable that the Ta-containing solid electrolytes are capable of recovering their ion conductivities by heat treatment. It is also conceivable that ion conductivities are also likely to be recovered by heat treatment if, instead of or together with Ta, Nb is used that serves as a pentavalent cation like Ta and that has the same ionic radius as Ta. In actuality, in Example 15, Nb was used instead of Ta, and in this case, high ion conductivity was achieved by 16-hour exposure and heat treatment.

In Comparative Examples 6 and 7 in which Zr and either Gd or Yb were contained in addition to Li and Cl, the ion conductivities after synthesis (initial conductivities) were considerably higher than in Comparative Example 2 in which only Zr was contained. In Examples 1 to 16 in which Gd or Yb was contained, the ion conductivities after synthesis were generally high. It is thus conceivable that the Gd- or Yb-containing solid electrolytes can more reliably improve ion conductivities after synthesis. It is also considered that the ion conductivity after synthesis can also be improved if Dy, Er, Ho, Eu, and Sc serving as trivalent cations like Gd and Yb and closely analogous in ionic radius to Gd or Yb are used, instead of or together with Gd or Yb. In actuality, in Examples 17 to 21, Ho, Dy, Er, Sc, and Eu were used, respectively, and in these cases, high ion conductivities were achieved after synthesis.

Next, description is given of examples of the present solid electrolyte when A is Na, and comparative examples therefor. Table 4 shows information such as the compositions of solid electrolytes according to Examples 22 and 23 and Comparative Examples 10 and 11, and evaluation results therefor. In the "Satisfy (rc/ra < 0.526)" column in Table 4, cases where the average ionic radius ratio was lower than 0.526 were evaluated as satisfied (indicated by an open circle), and cases where the average ionic radius ratio was higher than or equal to 0.526 were evaluated as not satisfied (indicated by a cross). In the calculation of the average ionic radius ratio, the ionic radius of Na (coordination number 6) was 1.02Å.

Table 4

| | Solid Electrolyte | Ion Conductivity [S/cm] | | | Maintenance Factor [%] | | Average Ionic Radius Ratio | Satisfy ( $r_c/r_a$ < 0.526) |
|---|---|---|---|---|---|---|---|---|
| | | After Synthesis | 16h Exposure | 16h Exposure + Heat Treatment | (16h Exposure) /(After Synthesis) | (16h Exposure + Heat Treatment) /(After Synthesis) | $r_c/r_a$ | |
| Example 22 | $Na_{1.8}Zr_{0.6}Ta_{0.3}Gd_{0.1}Cl_6$ | $8.2 \times 10^{-5}$ | $1.1 \times 10^{-5}$ | $6.9 \times 10^{-5}$ | 13 | 84 | 0.508 | ○ |
| Example 23 | $Na_{1.9}Zr_{0.5}Ta_{0.3}Yb_{0.2}Cl_6$ | $8.3 \times 10^{-5}$ | $1.7 \times 10^{-5}$ | $5.5 \times 10^{-5}$ | 20 | 66 | 0.504 | ○ |
| Comparative Example 10 | $Na_2ZrCl_6$ | $1.0 \times 10^{-5}$ | $1.3 \times 10^{-6}$ | $6.2 \times 10^{-6}$ | 13 | 62 | 0.507 | ○ |
| Comparative Example 11 | $Na_{2.5}Zr_{0.5}Yb_{0.5}Cl_6$ | $8.1 \times 10^{-5}$ | $2.4 \times 10^{-6}$ | $3.2 \times 10^{-6}$ | 3 | 4 | 0.527 | × |

Example 22

The electrolyte was prepared, tested, and evaluated in the same manner as in Example 1, except that NaCl, ZrCl$_4$, TaCl$_5$, and GdCl$_3$ serving as source powder in the preparation of the electrolyte according to Example 1 described above were weighed in a molar ratio of NaCl:ZrCl$_4$:TaCl$_5$:GdCl$_3$ = 1.8:0.6:0.3:0.1.

Example 23

The electrolyte was prepared, tested, and evaluated in the same manner as in Example 1, except that NaCl, ZrCl$_4$, TaCl$_5$, and YbCl$_3$ serving as source powder in the preparation of the electrolyte according to Example 1 described above were weighed in a molar ratio of NaCl:ZrCl$_4$:TaCl$_5$:YbCl$_3$ = 1.9:0.5:0.3:0.2.

Comparative Example 10

The electrolyte was prepared, tested, and evaluated in the same manner as in Example 1, except that NaCl and ZrCl$_4$ serving as source powder in the preparation of the electrolyte according to Example 1 described above were weighed in a molar ratio of NaCl:ZrCl$_4$ = 2: 1.

Comparative Example 11

The electrolyte was prepared, tested, and evaluated in the same manner as in Example 1, except that NaCl, ZrCl$_4$, and YbCl$_3$ serving as source powder in the preparation of the electrolyte according to Example 1 described above were weighed in a molar ratio of NaCl:ZrCl$_4$:YbCl$_3$ = 2.5:0.5:0.5.

As shown in Table 4, the solid electrolytes according to Examples 22 and 23 exhibited higher ion conductivities after synthesis, higher ion conductivities after 16-hou exposure, and higher ion conductivities after 16-hou exposure and heat treatment than the solid electrolytes according to Comparative Examples 10 and 11. In this way, even in the case of using an Na ion conductor, it is possible to achieve high initial conductivity and high stability by including, in addition to Na, at least one type of each of the trivalent, quadrivalent, and pentavalent elements as cations. The solid electrolytes according to Examples 22 and 23 also satisfied Composition Formula (2) given above.

Although a detailed mechanism for improved stability of the solid electrolytes according to Examples 22 and 23 remains unknown, it is conceivable that the inclusion of at least one type of each of trivalent, quadrivalent, and pentavalent elements as cations in addition to Na could contribute to stability. From the viewpoint of improving stability, it is preferable that the average ionic radius ratio is lower than 0.526 as described above. A low average ionic radius ratio indicates a short bond distance between the cations and Cl, and accordingly it is conceivable that the bonding force between the cations and Cl is high. This high bonding force is assumed to improve stability as materials.

As described thus far, the present solid electrolyte contains A, M$\alpha$, M$\beta$, M$\gamma$, and Cl. A is at least one element selected from the group consisting of Li and Na. M$\alpha$ is at least one element selected from the group consisting of Zr and Hf. M$\beta$ is at least one element selected from the group consisting of Ta and Nb. M$\gamma$ is at least one element selected from the group consisting of Gd, Yb, Dy, Er, Ho, Eu, and Sc. The solid electrolyte exhibits high ion conductivity (initial conductivity) and maintains high ion conductivity in an environment inside a dry room controlled to a dew point of -40°C, and thus having high stability. Accordingly, it is possible to easily produce a lithium- or sodium-ion battery by applying the present solid electrolyte in the existing process of preparing a battery in the environment inside a dry room. To achieve higher initial conductivity and higher stability, preferably A may contain Li, and more preferably A may be Li.

Preferably, the present solid electrolyte is expressed by the following composition formula:

$$A_{6-(4+a-b)(1+c)}(M\alpha_{(1-a-b)}M\beta_a M\gamma_b)_{1+c}Cl_6$$

where $0 < a$, $0 < b$, $a + b < 1$ and $-0.2 \le c \le 0.2$ are satisfied. This enables more reliably achieving a solid electrolyte with high ion conductivity and high stability.

In the case where A is Li, it is preferable that the value obtained by dividing the average ionic radius of Li, M$\alpha$, M$\beta$, and M$\gamma$ by the ionic radius of Cl (i.e., the average ionic radius ratio) may be less than 0.424. This enables more reliably improving the stability of the solid electrolyte.

In the case where A is Na, it is preferable that the value obtained by dividing the average ionic radius of Na, M$\alpha$, M$\beta$, and M$\gamma$ by the ionic radius of Cl is less than 0.526. Accordingly, it is possible to more reliably improve the stability of the solid electrolyte.

The present solid electrolyte and the all-solid-state secondary battery 1 may be modified in various ways.

The present solid electrolyte that contains Li, M$\alpha$, M$\beta$, M$\gamma$, and Cl does not necessarily have to satisfy Composition Formula (1) given above. The average ionic radius ratio may be higher than or equal to 0.424. Similarly, the present solid electrolyte that contains Na, M$\alpha$, M$\beta$, M$\gamma$, and Cl does not necessarily have to satisfy Composition Formula (2) given above. Moreover, the average ionic radius ratio may be higher than or equal to 0.526.

The present solid electrolyte may be mixed with any other substance (i.e., may contain Li or Na) and used as an electrolyte material. In this case, the present solid electrolyte may preferably be a component having a highest mass ratio, i.e., a major component, among components included in the electrolyte material. The mass ratio of the major component of the electrolyte material may be preferably higher than or equal to 50% by mass, more preferably higher than or equal to 60% by mass, and yet more preferably higher than or equal to 70% by mass.

The present solid electrolyte for use in the all-solid-state secondary battery 1 does not necessarily have to be included in all of the positive electrode 11, the negative electrode 12, and the electrolyte layer 13, and may be included in at least one of the positive electrode 11, the negative electrode 12, and the electrolyte layer 13. The present solid electrolyte may be used in any batteries other than all-solid-state secondary batteries, and may be used in applications other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

**REFERENCE SIGNS LIST**

1    all-solid-state secondary battery
11   positive electrode
12   negative electrode
13   electrolyte layer

**Claims**

1. A solid electrolyte comprising:

   A, M$\alpha$, M$\beta$, M$\gamma$, and Cl,
   wherein A is at least one element selected from a group consisting of Li and Na,
   M$\alpha$ is at least one element selected from a group consisting of Zr and Hf,
   M$\beta$ is at least one element selected from a group consisting of Ta and Nb,
   M$\gamma$ is at least one element selected from a group consisting of Gd, Yb, Dy, Er, Ho, Eu, and Sc, and
   the amount of substance of Cl is greater than the amount of substance of A.

2. The solid electrolyte according to claim 1, wherein
   A includes Li.

3. The solid electrolyte according to claim 1, wherein
   M$\alpha$ includes Zr.

4. The solid electrolyte according to claim 1, wherein
   M$\beta$ includes Ta.

5. The solid electrolyte according to claim 1, wherein
   M$\gamma$ includes Gd or Yb.

6. The solid electrolyte according to claim 1, being expressed by a composition formula below:

$$A_{6-(4+a-b)(1+c)}(M\alpha_{(1-a-b)}M\beta_a M\gamma_b)_{1+c}Cl_6$$

   where $0 < a$, $0 < b$, $a + b < 1$, and $-0.2 \leq c \leq 0.2$ are satisfied.

7. The solid electrolyte according to claim 1, wherein

A is Li, and
a value obtained by dividing an average ionic radius of Li, M$\alpha$, M$\beta$, and M$\gamma$ by an ionic radius of Cl is less than 0.424.

8. The solid electrolyte according to claim 1, wherein

A is Na, and
a value obtained by dividing an average ionic radius of Na, M$\alpha$, M$\beta$, and M$\gamma$ by an ionic radius of Cl is less than 0.526.

9. The solid electrolyte according to claim 1, wherein
no garnet structure is included.

10. A battery comprising:
the solid electrolyte according to any one of claims 1 to 9.

FIG. 1

## INTERNATIONAL SEARCH REPORT

International application No.

**PCT/JP2023/025147**

### A. CLASSIFICATION OF SUBJECT MATTER

***H01B 1/06***(2006.01)i
FI:  H01B1/06 A

According to International Patent Classification (IPC) or to both national classification and IPC

### B. FIELDS SEARCHED

Minimum documentation searched (classification system followed by classification symbols)

H01B1/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | US 2021/0043966 A1 (SAMSUNG ELECTRONICS CO., LTD.) 11 February 2021 (2021-02-11) paragraphs [0074], [0093], [0107], [0132], [0205] | 1-10 |
| A | WO 2020/188914 A1 (PANASONIC INTELLECTUAL PROPERTY MANAGEMENT CO., LTD.) 24 September 2020 (2020-09-24) | 1-10 |
| A | WO 2021/024783 A1 (TDK CORP.) 11 February 2021 (2021-02-11) | 1-10 |
| A | US 2021/0167419 A1 (SAMSUNG ELECTRONICS CO., LTD.) 03 June 2021 (2021-06-03) | 1-10 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/025147**

| Patent document cited in search report | | | Publication date (day/month/year) | Patent family member(s) | | | Publication date (day/month/year) |
|---|---|---|---|---|---|---|---|
| US | 2021/0043966 | A1 | 11 February 2021 | EP | 3778489 | A1 | |
| | | | | KR | 10-2021-0018040 | A | |
| | | | | CN | 112331908 | A | |
| WO | 2020/188914 | A1 | 24 September 2020 | US | 2021/0391594 | A1 | |
| | | | | EP | 3940816 | A1 | |
| | | | | CN | 113474910 | A | |
| WO | 2021/024783 | A1 | 11 February 2021 | US | 2022/0255125 | A1 | |
| | | | | CN | 114207896 | A | |
| US | 2021/0167419 | A1 | 03 June 2021 | EP | 3831779 | A1 | |
| | | | | KR | 10-2021-0068965 | A | |
| | | | | CN | 112993387 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022026960 W
- JP 2023012626 W
- JP 6934626 B
- WO 2020070956 A
- US 202143966

**Non-patent literature cited in the description**

- *Energy Storage Materials*, 2021, vol. 37, 47-54